# EUROPÄISCHE PATENTSCHRIFT

(11) **EP 1 882 548 B1**
(45) Veröffentlichungstag und Bekanntmachung des Hinweises auf die Patenterteilung: **02.12.2009**
(21) Anmeldenummer: 07013441.6
(22) Anmeldetag: 10.07.2007
(51) Int. Cl.: B23Q 23/00, G05B 19/404, B23B 31/02

(54) **Werkzeugmaschine mit verbessertem Rundlauf**
Machine tool with improved true running
Machine-outil à rotation améliorée

(30) Priorität: 29.07.2006 DE 102006035164
(43) Veröffentlichungstag der Anmeldung: 30.01.2008
(73) Patentinhaber: Walter Maschinenbau GmbH, 72072 Tübingen (DE)
(72) Erfinder: Nebeling, Paul, Dr.-Ing., 72072 Tübingen (DE); Häckh, Heinz, Dr.-Ing (FH), 73773 Aichwald (DE)
(74) Vertreter: Rüger, Barthelt & Abel Patentanwälte

(56) Entgegenhaltungen:
- WO-A-2005/030437
- GB-A- 807 994
- US-A1- 2006 249 918
- US-B1- 6 273 783

## Beschreibung

Die Erfindung betrifft eine Werkzeugmaschine mit zumindest einer Arbeitsspindel sowie ein Verfahren zum Bewegen eines Werkstücks oder Werkzeugs, das an einer solchen Arbeitsspindel gehalten ist.

Bei Werkzeugmaschinen werden heute hochgenaue Spindellagerungen eingesetzt, die überwiegend mit Wälzlagern bestückt sind. Hinsichtlich der erreichbaren Genauigkeiten, Drehzahlen, der Schmierung und der Lebensdauer wurden solche Spindellagerungen kontinuierlich weiter entwickelt. Obwohl dabei durchaus Fortschritte erzielt worden sind, lassen sich bei den derzeitigen Fertigungsmöglichkeiten die erzielbaren Genauigkeiten hinsichtlich radialer und axialer Laufruhe und Ausrichtung der gelagerten Welle nicht beliebig verbessern. Verbleibende Ungleichförmigkeiten sind zu erwarten.

Um diesem Problem zu begegnen, schlagen die DE 103 44 293 A1 und die WO 2005/030437 A1 jeweils eine Werkzeugschleifmaschine mit einer Maschinensteuereinrichtung vor, die mittels einer geeigneten Messeinrichtung zunächst die Fehlausrichtung eines Rohlings bestimmt, der von einer Werkstückaufnahme an der Arbeitsspindel aufgenommen ist. Bei der Schleifbearbeitung des Rohlings bzw. eines Werkstücks wird diese Fehlausrichtung berücksichtigt und kompensiert, indem die Schleifwerkzeuge dem Werkstück so nachgeführt werden, dass das Werkstück trotz Fehlausrichtung maßhaltig und konzentrisch bearbeitet wird.

Bei der Kompensation der Taumelbewegung eines z.B. zylindrischen Werkstücks durch eine der Zustellbewegung von Schleifwerkzeugen überlagerte Bewegung, ist die überlagerte Bewegung von der axialen Eingriffposition zwischen Werkstück und Werkzeug abhängig. Des Weiteren kann die Kompensation bei Werkzeugen, die in nicht nur punktförmigen sondern linienhaften oder sogar flächigem Eingriff mit dem Werkstück stehen schwierig oder gar unmöglich sein, einen Taumelschlag des an der drehenden Arbeitsspindel gehaltenen Werkstücks durch eine Bewegung der Werkzeuge zu kompensieren.

Davon ausgehend ist es Aufgabe der Erfindung eine verbesserte Möglichkeit zur Kompensation von Fehlausrichtungen von Werkzeugen oder Werkstücken an Arbeitsspindeln anzugeben.

Diese Aufgabe wird mit der Werkzeugmaschine nach Anspruch 1 wie auch mit dem Verfahren nach Anspruch 22 gelöst:
Die erfindungsgemäße Werkzeugmaschine weist eine Arbeitsspindel auf, die mit einer Stelleinrichtung zur dynamischen Verstellung der Ausrichtung der Drehachse der Arbeitsspindel verbunden ist. Mit der Stelleinrichtung kann die Ausrichtung der Arbeitsspindel in Abhängigkeit von dem Drehwinkel derselben beeinflusst werden. Damit kann die Arbeitsspindel relativ zu einem ortsfesten Maschinenkörper derart bewegt werden, dass die Bewegung eines an der Arbeitsspindel gespannten Körpers (Werkstück oder Werkzeug) eine ideale Drehbewegung ohne Exzentrizität bzw. Orbitalkomponente und gegebenenfalls ohne axiale Komponente vollführt. Es kann von einer aktiven drehwinkelabhängigen Verstellung der Ausrichtung der Arbeitsspindel in radialer und/oder axialer Richtung und somit von einer aktiven Spindellagerung gesprochen werden. Diese aktive Spindellagerung kann mit einer herkömmlichen Kompensationseinrichtung, wie beispielsweise gemäß DE 103 44 293 A1, kombiniert werden, bei der zur Korrektur der Fehlausrichtung des rotierenden Körpers andere Maschinenachsen genutzt werden.

Die dynamische Verstellung der Ausrichtung der Drehachse mittels der Stelleinrichtung gestattet z.B. das Schleifen nahe idealzylindrischer Flächen oder auch die Bearbeitung anderer Formelemente nahezu idealkonzentrisch zur gewünschten Drehachse ungeachtet etwaiger Fehlausrichtungen beispielsweise im Spannfutter oder in Folge anderer Einflüsse.

Es ist prinzipiell möglich, die Stelleinrichtung als Teil der Lagereinrichtung auszubilden. Die Lagereinrichtung ist vorzugsweise eine berührungslose Lagereinrichtung, wie beispielsweise eine hydrostatische Lagereinrichtung, eine Luftlagereinrichtung, eine magnetische Lagereinrichtung oder dergleichen. Durch Beeinflussung des jeweils tragenden Mediums (Ö1, Luft oder Magnetfeld) kann die Lagereinrichtung hinsichtlich der Position der Drehachse in zumindest einer Richtung quer zur Drehachse positioniert werden. Vorzugsweise ist die Positionierung in zwei zueinander rechtwinkligen Richtungen quer zur Drehachse möglich. Es ist jedoch auch möglich, die Stelleinrichtung so auszubilden, dass sie die Lagereinrichtung trägt und wie gewünscht positioniert. Als Stelleinrichtung können elektrische Stelleinrichtungen, beispielsweise Piezostelleinrichtungen, oder auch von anderen Medien betriebene Stelleinrichtungen, beispielsweise hydraulische Stelleinrichtungen dienen.

Die Stelleinrichtung wird vorzugsweise von einer Steuereinrichtung betätigt, die über eine Sensoreinrichtung oder andere geeignete Mittel die Drehposition der Arbeitsspindel erfasst und die Stelleinrichtung entsprechend steuert. Außerdem ist die Steuereinrichtung mit einer Datenquelle für Daten verbunden, die die Fehlausrichtung des Körpers an der Arbeitsspindel kennzeichnen. Die Datenquelle kann eine Messeinrichtung sein, die die Exzentrizität des Körpers an zwei axial voneinander beabstandeten Stellen erfasst, beispielsweise eine Lasermesseinrichtung, taktile Messeinrichtungen oder dergleichen. Die Datenquelle kann eine Speichereinrichtung sein, in der Messdaten abgespeichert sind.

Vorzugsweise weist die Stelleinrichtung eine erreichbare Stellfrequenz auf, die mit der gewünschten Betriebsdrehzahl der Arbeitsspindel übereinstimmt oder größer als diese ist. Damit kann ohne Verlangsamung der Arbeitsgeschwindigkeit der Werkzeugmaschine eine etwaige Fehlausrichtung des Körpers an der Arbeitsspindel durch die Stelleinrichtung bzw. aktive Spindellagerung kompensiert werden. Wenn die maximale Stellfrequenz der Stelleinrichtung niedriger als die gewünschte Betriebsdrehzahl der Arbeitsspindel ist, kann die Arbeitsspindeldrehzahl reduziert werden, um dennoch einen Fehlausrichtungsausgleich zu gestatten. In diesem Fall geht die Erhöhung der Bearbeitungsgenauigkeit aber zu Lasten der Bearbeitungsgeschwindigkeit.

Die Erfassung der Fehlausrichtung des Körpers kann sowohl vor als auch während der eigentlichen Bearbeitung durchgeführt werden. Dabei können sowohl berührende als berührungsslos arbeitende Positionssensoren zum Einsatz kommen. Die Stellbewegung wird dabei vorzugsweise unabhängig von der Spindeldrehzahl nur anhand der Position der Arbeitsspindel vorgenommen.

Zur Kompensation von Fehlausrichtungen können die entsprechenden Elemente der Stelleinrichtung sowohl eine radiale Stellbewegung als auch, falls gewünscht, eine axiale Stellbewegung durchführen. Die zur Fehlausrichtungskompensation genutzten Daten können in der Werkzeugmaschine selbst oder auch von einer externen Datenquelle, wie beispielsweise einer Messmaschine, stammen.

Gemäß dem erfindungsgemäßen Verfahren wird die Fehlausrichtung eines an einer Arbeitsspindel gespannten Körpers bestimmt, bei Drehung der Arbeitsspindel wird ihrer Drehbewegung eine Taumelbewegung überlagert, die so bemessen ist, dass die Fehlausrichtung des Werkstücks wenigstens an einer fest gelegten, vorzugsweise aber insgesamt, kompensiert wird. Damit ist eine erhöhte Bearbeitungsgenauigkeit erzielbar.

Weitere Einzelheiten vorteilhafter Ausführungsformen der Erfindung sind Gegenstand der Zeichnung, der Beschreibung oder von Unteransprüchen.

In der Zeichnung sind Ausführungsbeispiele der Erfindung veranschaulicht. Es zeigen:
- Figur 1: eine Werkzeugmaschine in schematisierter Seitenansicht,
- Figur 2: die Arbeitsspindel, ihre Lagerung und eine zugehörige Stelleinrichtung der Werkzeugmaschine nach Figur 1 in schematisierter Längsschnittdarstellung,
- Figur 3: die Einrichtung gemäß Figur 2 im Querschnitt,
- Figur 4: die geometrischen Verhältnisse bei der Drehung eines an der Werkzeugspindel fehlausgerichtet gespannten Körpers in perspektivischer schematisierter Darstellung,
- Figur 5: den Körper nach Figur 4 bei seiner Drehung mit kompensierter Fehlausrichtung,
- Figur 6: die Einrichtung zur Fehlausrichtungskompensation in schematisierter Prinzipdarstellung,
- Figur 7: eine hydrostatische Lagereinrichtung mit Fehlausrichtungskompensation in zumindest einer Richtung in aufs Äußerste schematisierter Darstellung,
- Figur 8: die Bewegung eines zylindrischen fehlausgerichteten Körpers in schematisierter geometrischer Darstellung und
- Figur 9: die Bewegung eines fehlausgerichteten zylindrischen Körpers bei zumindest in einer Richtung kompensierter Fehlausrichtung in schematisierter geometrischer Darstellung.

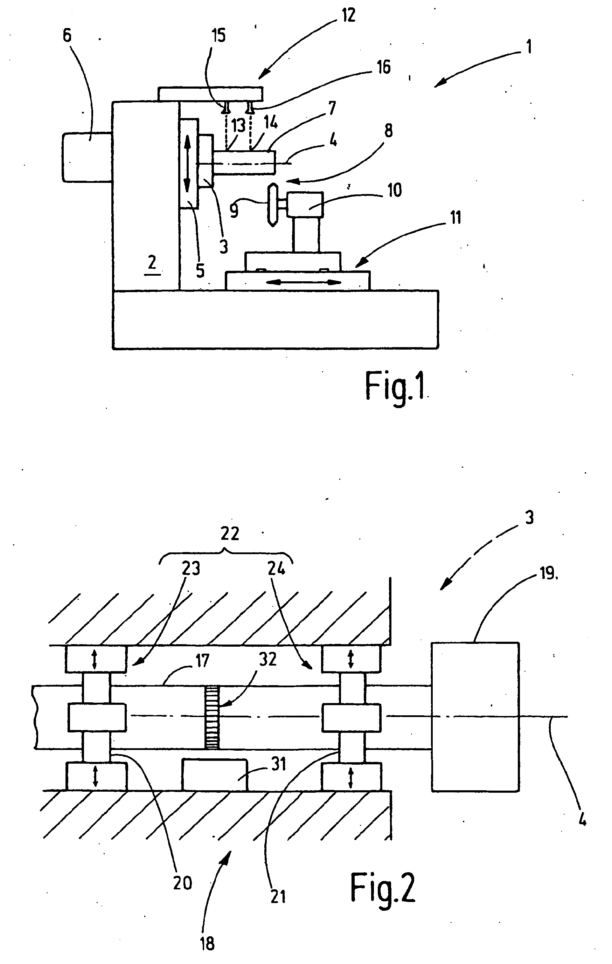

In Figur 1 ist eine Werkzeugmaschine 1 mit einem Maschinengestell 2 veranschaulicht, an dem eine Arbeitsspindel 3 um eine Drehachse 4 drehbar gelagert ist. Die Arbeitsspindel 3 kann an dem Maschinengestell 2 ruhend oder, wie dargestellt, über einen oder mehrere Schlitten 5 im Raum linear oder auf anderen Bahnen positionierbar gelagert sein. Der Arbeitsspindel ist ein Antrieb 6 zugeordnet, um die Arbeitsspindel 3 drehend anzutreiben. Die Arbeitsspindel 3 kann der Aufnahme eines Werkstücks oder eines Werkzeugs dienen. In Figur 1 ist dies durch einen zylindrischen Körper 7 veranschaulicht, der ein Werkstück bildet. Zur Bearbeitung desselben dient ein Werkzeug 8, das in Figur 1 durch eine Schleifscheibe 9 veranschaulicht wird. Diese wird von einem Schleifkopf 10 angetrieben, der über eine Positioniereinrichtung, beispielsweise einen Kreuzschlitten 11 von dem Maschinengestell 2 getragen sein kann. Durch den Kreuzschlitten kann der Schleifkopf 10 in verschiedenen Raumrichtungen positioniert werden. Zusätzlich kann eine Drehung des Schleifkopfs 10 um einen oder mehrere Achsen vorgesehen sein.

Zur Bestimmung der Ausrichtung des Körpers 7 dient eine Messeinrichtung 12, die den Rundlauf des Körpers 7 an zwei voneinander axial beabstandeten Stellen 13, 14 misst. Dazu können beispielsweise zwei Lasermessköpfe 15, 16 oder andere geeignete Messmittel dienen. Die Messung kann vor der Bearbeitung des Körpers 7 und/oder während der Bearbeitung desselben erfolgen.

Figur 2 veranschaulicht die Arbeitsspindel 2 detaillierter, wenn auch schematisch. Zu ihr gehört eine Welle 17, die in einer Lagereinrichtung 18 drehbar gelagert und an ihrem freien Ende mit einer Aufnahmeeinrichtung für den Körper 7, z.B. in Form eines Spannfutters 19, versehen ist. Zu der Lagereinrichtung 18 gehören zumindest zwei axial voneinander beabstandete Lager 20, 21, die miteinander fluchten und die Drehachse 4 festlegen. Die Lager 20, 21 können beliebiger Bauart sein. Vorzugsweise handelt es sich um berührungslose Lager, wie beispielsweise Luftlager, hydrostatische Lager oder magnetostatische Lager.

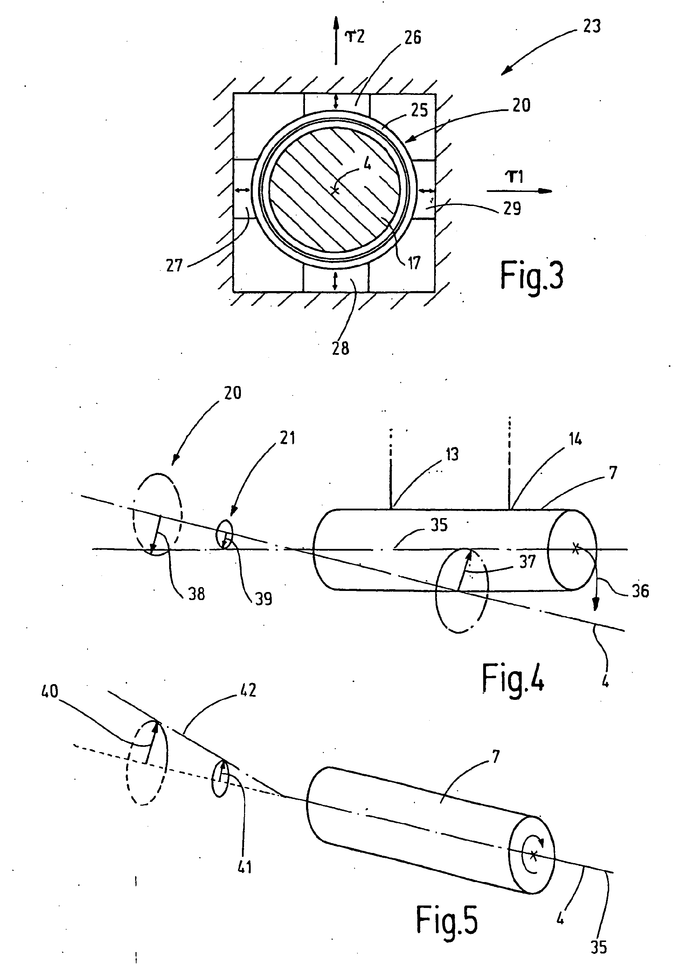

Der Lagereinrichtung 18 ist eine Stelleinrichtung 22 zugeordnet, zu der zwei voneinander axial beabstandete Stellanordnungen 23, 24 gehören. Diese gestatten eine Verlagerung des Drehzentrums der gelagerten Welle 17 in zumindest einer Radialrichtung. Im vorliegenden Ausführungsbeispiel ist die Verlagerung in allen Radialrichtungen möglich. Dazu wird nachfolgend unter Bezugnahme auf Figur 3 die Stellanordnung 23 exemplarisch beschrieben:
Das Lager 20 wird an seinem Außenring 25 von mehreren, beispielsweise vier Aktoren, beispielsweise Piezoaktoren 26, 27, 28, 29, zentriert gehalten. Dabei liegen jeweils zwei Piezoaktoren 26, 28; 27, 29 einander paarweise gegenüber. Die Piezoaktoren 26 bis 29 bilden gemeinsam eine Piezostelleinrichtung, die eine erste Stellrichtung r1 und eine zweite Stellrichtung r2 definieren, die beide radial zu der Drehachse 4 orientiert sind. Die durch die Piezostelleinrichtung gebildete Stellanordnung 23 ist, wie Figur 6 veranschaulicht, an eine Steuereinrichtung 30 angeschlossen. Ebenso ist die Stellanordnung 24 an die Steuereinrichtung 30 angeschlossen. Die Steuereinrichtung 30 erhält Signale von der Messeinrichtung 12 und einem Winkelgeber 31, der die Drehposition der Welle 17 erfasst. Der Winkelgeber 32 kann beispielsweise in dem Antrieb 6 oder, wie Figur 2 zeigt, in der Nähe der Welle 17 untergebracht sein und eine an der Welle 17 vorgesehene Markierung 32 erfassen. Vorzugsweise erzeugt der Winkelgeber 31 Signale, die den Drehwinkel der Welle 17 absolut kennzeichnen. Alternativ kann ein inkrementaler Geber eingesetzt werden.

Die Steuereinrichtung 30 basiert vorzugsweise auf einer Recheneinrichtung, beispielsweise einem Mikroprozessor. Sie verfügt über eine Verarbeitungseinrichtung 33 und eine Speichereinrichtung 34, in der ein entsprechendes Verarbeitungsprogramm und gegebenenfalls Daten über die Fehlausrichtung des Körpers 7 gespeichert sind.

Die insoweit beschriebene Werkzeugmaschine 1 arbeitet wie folgt:
Zur Veranschaulichung der Funktion wird davon ausgegangen, dass der Körper 7 an der Arbeitsspindel 3, wie in Figur 4 stark übertrieben dargestellt, mit einer Fehlausrichtung gehalten ist. Die Drehachse 4 der Arbeitsspindel und die Symmetrieachse 35 des Körpers 7 stimmen miteinander nicht überein. Sie können aneinander vorbeigehen oder einander zufällig schneiden. Außerdem können sie parallel oder im spitzen Winkel zueinander stehen. In Figur 4 ist ein Fall dargestellt, bei dem die Drehachse 4 und die Symmetrieachse 35 einander nicht schneidend schräg aneinander vorbeilaufen.

Wenn die Arbeitsspindel um die Drehachse 4 dreht, vollführt der Körper 7 eine Taumelbewegung, die in Figur 4 durch einen Pfeil 36 veranschaulicht ist. Jeder Punkt seiner Symmetrieachse 33 vollführt dabei eine Orbitalbewegung um die Drehachse 4. Die Exzentrizität eines ausgewählten Punkts der Symmetrieachse 33 ist in Figur 4 durch einen Radiuspfeil 37 veranschaulicht. Im Bereich der in Figur 4 nur ganz symbolisch durch Bezugspfeile angedeuteten Lager 20, 21 vollführt die Symmetrieachse 35 ebenfalls eine Orbitalbewegung, die durch Radiuspfeile 38, 39 angedeutet ist. Dies gilt bei ruhenden Stellanordnungen 23, 24, d.h. wenn die Welle 17 keine Radialbewegungen vollführt.

Zum Einmessen der Werkzeugmaschine 1 wird nun die Taumelbewegung des Körpers 7 verfolgt, indem die Welle 17 um die Drehachse 4 gedreht und an den Stellen 13, 14 die Bewegung des Körpers 7 verfolgt wird. Die sich ergebenden Daten werden beispielsweise in dem Speicher 34 abgespeichert.

Sind die Daten insoweit aufgenommen, d.h. die Exzentrizitäten an den Stellen 13, 14 bestimmt, können daraus die anhand der Radiuspfeile 38, 39 ersichtlichen Exzentrizitäten berechnet werden. Diese werden invertiert, d.h. in Radiuspfeile 40, 41 umgerechnet, die die Radiuspfeile 38, 39 kompensieren. Zumindest im einfachen Falle, wenn sich die Drehachse 4 und die Symmetrieachse 35 schneiden, wird der Radiuspfeil 40 erhalten, indem der Radiuspfeil 38 um 180° um die Drehachse 4 gedreht wird. Entsprechendes gilt für die Radiuspfeile 39, 41. Im Folgenden werden nun die Stellanordnungen 23, 24 von der Steuereinrichtung 30 so angesteuert, dass die Welle 17 entsprechend der Vorgabe der Radiuspfeile 40, 41 radial verlagert wird. Die durch die Radiuspfeile 40, 41 beschriebene Verlagerung läuft mit Drehung der Welle 17 um, d.h. die Piezoaktoren 26 bis 29 werden entsprechend des aktuellen Drehwinkels der Welle 17 angesteuert. Die Welle 17 vollführt somit eine Taumelbewegung, im Verlauf derer ihre Achse 42 auf einer in Figur 5 angedeuteten kegelförmigen oder kegelstumpfförmigen Bahn läuft. Im Ergebnis werden die Symmetrieachse 35 und die Drehachse 4 in Übereinstimmung gebracht. Der Körper 7 vollführt somit eine reine ideale Drehbewegung.

Bei der vorstehenden Beschreibung ist davon ausgegangen worden, dass die Lagereinrichtung und die Stelleinrichtung durch gesonderte Baueinheiten ausgebildet sind. Figur 7 veranschaulicht eine abgewandelte Ausführungsform, bei der die Lagereinrichtung 18 und die Stelleinrichtung 22 eine untrennbare Einheit bilden. Die Lagereinrichtung 18 wird hier durch eine hydrostatische Lagereinrichtung zur Lagerung der Welle 17 gebildet. Es sind wenigstens drei vorzugsweise vier am Umfang eine Lagerbohrung verteilte Taschen 43, 44, 45, 46 vorgesehen, die über eine Ölzuführleitung 47 mit unter Druck stehendem Öl beaufschlagt sind. Die Ränder der Taschen 43 bis 46 bilden mit der Welle 17 einen engen Spalt. Zwischen den Taschen 43 bis 46 sind Ölfangtaschen 48, 49, 50, 51 vorgesehen, die durch den Spalt strömendes Öl ableiten. Zwei gegenüber liegende Taschen 44, 46 sind über eine Ventileinrichtung 52 mit einer Quelle 53 für unter Druck stehendes Hydraulikfluid, z.B. Öl, verbunden, das unter einem erhöhten Druck steht. Durch gezielte Beaufschlagung der Tasche 44 oder der Tasche 46 mit erhöhtem Druck kann somit die Welle 17 aus ihrer Zentralposition heraus verlagert werden. Obwohl der erzielbare Stellhub lediglich wenige Bruchteile eines Millimeters beträgt, kann der Stellweg für Präzisionsanwendungen ausreichen. Ebenso können die Taschen 43, 45 über Ventile mit wechselnden Drücken beaufschlagbar sein, wenn nicht nur eine Verstellung in Horizontal- sondern auch in Vertikalrichtung gewünscht ist.

In der vorstehenden Beschreibung verkörpert der Körper 7 das Werkstück und die Schleifscheibe das Werkzeug 8. Anstelle der Schleifscheibe kann jedoch auch ein Werkstück vorgesehen werden, wobei der Körper 7 dann für das Werkzeug 8, z.B. ein Schleifwerkzeug steht.

Bei den vorstehend beschriebenen Ausführungsbeispielen ist davon ausgegangen worden, dass die Taumelbewegung des Körpers 7 in allen Radialrichtungen, d.h. vollständig kompensiert wird, um eine ideale Drehbewegung zu erhalten. Für einfachere Fälle kann es jedoch genügen, die Taumelbewegung lediglich an einer oder mehreren ausgewählten Stellen zu kompensieren, wie es in den Figuren 8 und 9 veranschaulicht ist. In Figur 8 und 9 symbolisiert ein Pfeil 53 die Stelle, an der von dem Körper 7 Material, beispielsweise in einem spanenden Bearbeitungsvorgang abgehoben werden soll. Ist eine Exzentrizität 54 vorhanden, wie in Figur 8 angedeutet, ist eine präzise Bearbeitung des Körpers 7 nicht möglich. Wird die Exzentrizität 54 jedoch für eine Richtung kompensiert, die mit der Vorschubrichtung des Werkzeugs gemäß Pfeil 53 identisch ist, vollführt der Körper 7, wie Figur 9 veranschaulicht, zwar noch eine Taumelbewegung quer zur Vorschubrichtung 53. Die Komponente in Vorschubrichtung 53 ist jedoch aufgehoben. Diese Art der Kompensation kann mit Stelleinrichtungen erreicht werden, die eine Stellbewegung nur in einer ausgewählten Radialrichtung zulassen. Bevorzugt wird jedoch die vorbeschriebene vollständige Kompensation.

An einer Werkzeugmaschine ist an der Spindellagerung eine dynamische Spindelverstellung vorgesehen, die eine Verstellbewegung zur Kompensation eines Taumelschlags des von der Arbeitsspindel gehaltenen Körpers gestattet. Die Regelung ist mindestens so dynamisch ausgelegt, dass die Regelung ein sicheres Nachführen der rotierenden Arbeitsspindel ermöglicht. Dadurch können ein oder mehrere Spindeln relativ zu einem fixen Maschinenkörper derart bewegt werden, dass die Bahn eines an der Arbeitsspindel gehaltenen Körpers eine ideale Rotation um die gewünschte Körperachse (Symmetrieachse) ist. Die Kompensationsbewegung kann durch Beaufschlagung entsprechender Aktoren der Lagereinrichtung mit sinus- und cosinusförmigen Stellsignalen erreicht werden, die sich zu einer Kreisbewegung der betreffenden Lagereinrichtung überlagern. Diese Kreisbewegung kompensiert Orbitalbewegungen des fehlausgerichteten, an der Arbeitsspindel gehaltenen Körpers 7.

### Bezugszeichenliste

- 1: Werkzeugmaschine
- 2: Maschinengestell
- 3: Arbeitsspindel
- 4: Drehachse
- 5: Schlitten
- 6: Antrieb
- 7: Körper
- 8: Werkstück
- 9: Schleifscheibe
- 10: Schleifkopf
- 11: Kreuzschlitten
- 12: Messeinrichtung
- 13: Stelle
- 14: Stelle
- 15: Lasermesskopf
- 16: Lasermesskopf
- 17: Welle
- 18: Lagereinrichtung
- 19: Spannfutter
- 20: Lager
- 21: Lager
- 22: Stelleinrichtung
- 23: Stellanordnung
- 24: Stellanordnung
- 25: Außenring
- 26: Piezoaktor
- 27: Piezoaktor
- 28: Piezoaktor
- 29: Piezoaktor
- 30: Steuereinrichtung
- 31: Winkelgeber
- 32: Markierung
- 33: Verarbeitungseinrichtung
- 34: Speicher
- 35: Symmetrieachse
- 36: Pfeil
- 37: Radiuspfeil
- 38: Radiuspfeil
- 39: Radiuspfeil
- 40: Radiuspfeil
- 41: Radiuspfeil
- 42: Achse
- 43: Tasche
- 44: Tasche
- 45: Tasche
- 46: Tasche
- 47: Leitung
- 48: Tasche
- 49: Tasche
- 50: Tasche
- 51: Tasche
- 52: Ventileinrichtung
- 53: Pfeil/Vorschubbewegung

## Patentansprüche

1. Werkzeugmaschine (1)
mit einem Maschinengestell (2), das mit Mitteln (19) zur Lagerung wenigstens eines Werkstücks und oder eines Werkzeugs (8) versehen ist,
mit wenigstens einer Arbeitsspindel (3), die zur Aufnahme eines Werkzeugs und/oder eines Werkstücks (8) eingerichtet und in Bezug auf das Maschinengestell (2) drehend angetrieben ist,
mit einer Lagereinrichtung (18), die zur um eine vorgegebene Drehachse (4) drehdrehbaren Lagerung der Arbeitsspindel (3) eingerichtet ist
**gekennzeichnet durch**
eine von einem Stellsignal gesteuerte Stelleinrichtung (22) zur bei Drehung der Arbeitsspindel (3) dynamischen Verstellung der Ausrichtung der Drehachse (4) **durch** eine erteilte zusätzliche Taumelbewegung,
wobei die Stelleinrichtung (22) zwei bezüglich der Drehachse (4) in axialem Abstand zueinander angeordnete Stellanordnungen (23, 24) aufweist.

2. Werkzeugmaschine nach Anspruch 1, **dadurch gekennzeichnet, dass** die Lagereinrichtung (18) von dem Maschinengestell (2) getragen ist.

3. Werkzeugmaschine nach Anspruch 1, **dadurch gekennzeichnet, dass** die Lagereinrichtung (18) von einer Positioniereinrichtung (5) getragen ist.

4. Werkzeugmaschine nach Anspruch 1, **dadurch gekennzeichnet, dass** die Stelleinrichtung (22) zumindest einen ersten Aktuator (27, 29; 44, 46) aufweist, um die Drehachse (4) in einer ersten Richtung (r1) quer zu der Drehachse (4) zu bewegen.

5. Werkzeugmaschine nach Anspruch i, **dadurch gekennzeichnet, dass** die Stelleinrichtung (22) zumindest einen zweiten Aktuator (26, 28) aufweist, um die Drehächse (4) in einer zweiten Richtung (r2) zu bewegen, die quer zu der Drehachse (4) orientiert sowie von der ersten Richtung (r1) verschieden ist.

6. Werkzeugmaschine nach Anspruch 1, **dadurch gekennzeichnet, dass** die Stelleinrichtung (22) eine Stellfrequenz aufweist, die mit der Drehzahl der Arbeitsspindel (3) übereinstimmt oder größer als diese ist.

7. Werkzeugmaschine nach Anspruch 1, **dadurch gekennzeichnet, dass** der Betrieb der Stelleinrichtung (22) zu der Drehung der Arbeitsspindel (3) synchronisiert ist.

8. Werkzeugmaschine nach Anspruch 1, **dadurch gekennzeichnet, dass** die Stelleinrichtung (22) eine Taumel-Stelleinrichtung ist, die der Arbeitsspindel (3) eine ihrer Drehbewegung überlagerte Taumelbewegung erteilt.

9. Werkzeugmaschine nach Anspruch 1, **dadurch gekennzeichnet, dass** die Arbeitsspindel (3) eine Aufnahmeeinrichtung (19) für ein Werkstück und/oder ein Werkzeug (8) aufweist.

10. Werkzeugmaschine nach Anspruch 1, **dadurch gekennzeichnet, dass** die von der Stelleinrichtung (22) erzeugte Stellbewegung zu einer Taumelbewegung invers ist, die ein von der Arbeitsspindel (3) aufgenommenes Werkzeug oder Werkstück (8) bei Drehung um die Drehachse (4) vollführt.

11. Werkzeugmaschine nach Anspruch 1, **dadurch gekennzeichnet, dass** die Lagereinrichtung (18) eine berührungslose Lagereinrichtung ist.

12. Werkzeugmaschine nach Anspruch 1, **dadurch** ge-kennzeichnet, dass die Lagereinrichtung (18) eine pneumatische Lagereinrichtung ist.

13. Werkzeugmaschine nach Anspruch 1, **dadurch gekennzeichnet, dass** die Lagereinrichtung (18) eine hydrostatische Lagereinrichtung ist.

14. Werkzeugmaschine nach Anspruch 1, **dadurch gekennzeichnet, dass** die Lagereinrichtung (18) eine Magnetlagereinrichtung ist.

15. Werkzeugmaschine nach Anspruch 1, **dadurch gekennzeichnet, dass** die Stelleinrichtung (22) innerhalb der Lagereinrichtung (18) ausgebildet ist, indem die Lagereinrichtung eine durch das Stellsignal verstellbare Exzentrizität aufweist.

16. Werkzeugmaschine nach Anspruch 1, **dadurch gekennzeichnet, dass** die Stelleinrichtung (22) die Lagereinrichtung (18) trägt.

17. Werkzeugmaschine nach Anspruch 1, **dadurch gekennzeichnet, dass** die Stelleinrichtung (22) eine Piezostelleinrichtung (26, 27, 28, 29) ist.

18. Werkzeugmaschine nach Anspruch 1, **dadurch gekennzeichnet, dass** die Stelleinrichtung (22) eine Magnetstelleinrichtung ist.

19. Werkzeugmaschine nach Anspruch 1, **dadurch gekennzeichnet, dass** die Stelleinrichtung (22) mit einer Steuereinrichtung (30) verbunden ist, die mit einer Positionserfassungseinrichtung (31) zur Erfassung der Drehposition der Arbeitsspindel (3) verbunden ist.

20. Werkzeugmaschine nach Anspruch 1, **dadurch gekennzeichnet, dass** die Stelleinrichtung (22) mit einer Messeinrichtung (12) zur Bestimmung einer drehpositionsabhängigen Fehllage des mit der Arbeitsspindel (3) verbundenen Werkstücks oder Werkzeugs (8) verbunden ist.

21. Verfahren zum Bewegen eines Werkstücks oder Werkzeugs (8) mittels einer Arbeitsspindel (3), bei dem in einer Werkzeugmaschine (1)
das Werkstück oder Werkzeug (8) an der Arbeitsspindel (3) der Werkzeugmaschine (1) gespannt wird,
die Fehlausrichtung des Werkstücks oder Werkzeugs (8) zu der gewünschten Drehachse (4) des Werkstücks (8) oder Werkzeugs bestimmt wird,
der Arbeitsspindel (4) mit dem Werkstück oder Werkzeug (8) bei Drehung eine zusätzliche Taumelbewegung erteilt wird, um die Fehlausrichtung des Werkstücks oder Werkzeugs (8) wenigstens an einer festgelegten Stelle (53) zu kompensieren.

22. Verfahren nach Anspruch 21 **dadurch gekennzeichnet, dass** die festgelegte Stelle (53) eine Stelle ist, an der das Werkstück (8) mit einem Werkzeug oder das Werkzeug mit einem Werkstück (8) in Eingriff steht.

## Claims

1. Machine tool (1),
with a machine frame (2) provided with elements (19) for mounting at least one workpiece and/or a tool (8),
with at least one work spindle (3), which is arranged to receive a tool and/or a workpiece (8) and is rotationally driven in relation to the machine frame (2),
with a bearing means (18), which is arranged to rotatably mount the work spindle (3) around a given rotational axis (4),
**characterised by**
an adjusting means (22) controlled by an adjusting signal for dynamic adjustment of the alignment of the rotational axis (4) during rotation of the work spindle (3) by means of an additional imparted wobble movement,
wherein the adjusting means (22) has two adjusting arrangements (23, 24) arranged axially spaced from one another in relation to the rotational axis (4).

2. Machine tool according to claim 1, **characterised in that** the bearing means (18) is supported by the machine frame (2).

3. Machine tool according to claim 1, **characterised in that** the bearing means (18) is supported by a positioning means (5).

4. Machine tool according to claim 1, **characterised in that** the adjusting means (22) has at least one first actuator (27, 29; 44, 46) to move the rotational axis (4) in a first direction (r1) transversely to the rotational axis (4).

5. Machine tool according to claim 1, **characterised in that** the adjusting means (22) has at least one second actuator (26, 28) to move the rotational axis (4) in a second direction (r2), which is oriented transversely to the rotational axis (4) and also differs from the first direction (r1).

6. Machine tool according to claim 1, **characterised in that** the adjusting means (22) has an adjusting frequency, which is consistent with the rotational speed of the work spindle (3) or is higher than this.

7. Machine tool according to claim 1, **characterised in that** the operation of the adjusting means (22) is synchronised to the rotation of the work spindle (3).

8. Machine tool according to claim 1, **characterised in that** the adjusting means (22) is a wobble adjusting means, which imparts to the work spindle (3) a wobble movement superposed on its rotational movement.

9. Machine tool according to claim 1, **characterised in that** the work spindle (3) has a receiving means (19) for a workpiece and/or a tool (8).

10. Machine tool according to claim 1, **characterised in that** the adjusting movement generated by the adjusting means (22) is inverted relative to a wobble movement, which a tool or workpiece (8) received by the work spindle (3) performs during rotation around the rotational axis (4).

11. Machine tool according to claim 1, **characterised in that** the bearing means (18) is a contactless bearing means.

12. Machine tool according to claim 1, **characterised in that** the bearing means (18) is a pneumatic bearing means.

13. Machine tool according to claim 1, **characterised in that** the bearing means (18) is a hydrostatic bearing means.

14. Machine tool according to claim 1, **characterised in that** the bearing means (18) is a magnetic bearing means.

15. Machine tool according to claim 1, **characterised in that** the adjusting means (22) is configured within the bearing means (18) as a result of the bearing means having an eccentricity that is adjustable by means of the adjusting signal.

16. Machine tool according to claim 1, **characterised in that** the adjusting means (22) supports the bearing means (18).

17. Machine tool according to claim 1, **characterised in that** the adjusting means (22) is a piezoelectric adjusting means (26, 27, 28, 29).

18. Machine tool according to claim 1, **characterised in that** the adjusting means (22) is a magnetic adjusting means.

19. Machine tool according to claim 1, **characterised in that** the adjusting means (22) is connected to a control means (30), which is connected to a position finding means (31) for detecting the rotational position of the work spindle (3).

20. Machine tool according to claim 1, **characterised in that** the adjusting means (22) is connected to a measuring means (12) for determination of a rotational position-dependent incorrect position of the workpiece or tool (8) connected to the work spindle (3).

21. Method for moving a workpiece or tool (8) by means of a work spindle (3) in a machine tool (1), in which
the workpiece or tool (8) is clamped on the work spindle (3) of the machine tool (1), the misalignment of the workpiece or tool (8) in relation to the desired rotational axis (4) of the workpiece (8) or tool is determined,
an additional wobble movement is imparted to the work spindle (4) with the workpiece or tool (8) during rotation in order to compensate the misalignment of the workpiece or tool (8) at least at a defined location (53).

22. Method according to claim 21, **characterised in that** the defined location (53) is a location, at which the workpiece (8) stands in engagement with a tool or the tool stands in engagement with a workpiece (8).

## Revendications

1. Machine-outil (1),
comprenant un bâti de machine (2) qui est doté de moyens (19) pour monter au moins une pièce à usiner et/ou un outil (8),
comprenant au moins une broche de travail (3) qui est conçue pour recevoir un outil et/ou une pièce à usiner (8) et est entraînée en rotation par rapport au bâti de machine (2),
comprenant un dispositif de support (18) qui est conçu pour le montage de la broche de travail (3), avec possibilité de rotation autour d'un axe de rotation (4) prédéterminé,
**caractérisée par le fait qu'**elle comporte un dispositif de réglage (22) commandé par un signal de réglage et destiné à effectuer, lors de la rotation de la broche de travail (3), une modification dynamique de l'orientation de l'axe de rotation (4), en communiquant un mouvement de nutation complémentaire, le dispositif de réglage (22) présentant deux ensembles de réglage (23, 24) qui sont disposés à distance axiale l'un de l'autre, rapporté à l'axe de rotation (4).

2. Machine-outil selon la revendication 1, **caractérisée par le fait que** le dispositif de support (18) est porté par le bâti de machine (2).

3. Machine-outil selon la revendication 1, **caractérisée par le fait que** le dispositif de support (18) est porté par un dispositif de positionnement (5).

4. Machine-outil selon la revendication 1, **caractérisée par le fait que** le dispositif de réglage (22) présente au moins un premier actionneur (27, 29; 44, 46) pour déplacer l'axe de rotation (4) dans une première direction (r1) qui est perpendiculaire à l'axe de rotation (4).

5. Machine-outil selon la revendication 1, **caractérisée par le fait que** le dispositif de réglage (22) présente au moins un deuxième actionneur (26, 28) pour déplacer l'axe de rotation (4) dans une deuxième direction (r2) qui est perpendiculaire à l'axe de rotation (4) et différente de la première direction (r1).

6. Machine-outil selon la revendication 1, **caractérisée par le fait que** le dispositif de réglage (22) présente une fréquence de réglage qui correspond à la vitesse de rotation de la broche de travail (3) ou est supérieure à cette vitesse.

7. Machine-outil selon la revendication 1, **caractérisée par le fait que** le fonctionnement du dispositif de réglage (22) est synchronisé avec la rotation de la broche de travail (3).

8. Machine-outil selon la revendication 1, **caractérisée par le fait que** le dispositif de réglage (22) est du type à nutation qui communique à la broche de travail (3) un mouvement de nutation se superposant à son mouvement de rotation.

9. Machine-outil selon la revendication 1, **caractérisée par le fait que** la broche de travail (3) présente un moyen de réception (19) pour une pièce à usiner et/ou un outil (8).

10. Machine-outil selon la revendication 1, **caractérisée par le fait que** le mouvement de réglage produit par le dispositif de réglage (22) est inverse à un mouvement de nutation qui est exécuté par un outil ou une pièce à usiner (8) tenu(e) par la broche de travail (3), lorsqu'il/elle tourne autour de l'axe de rotation (4).

11. Machine-outil selon la revendication 1, **caractérisée par le fait que** le dispositif de support (18) est de type sans contact.

12. Machine-outil selon la revendication 1, **caractérisée par le fait que** le dispositif de support (18) est de type pneumatique.

13. Machine-outil selon la revendication 1, **caractérisée par le fait que** le dispositif de support (18) est de type hydrostatique.

14. Machine-outil selon la revendication 1, **caractérisée par le fait que** le dispositif de support (18) est de type à palier magnétique.

15. Machine-outil selon la revendication 1, **caractérisée par le fait que** le dispositif de réglage (22) est réalisé à l'intérieur du dispositif de support (18), du fait que le dispositif de support présente une excentricité pouvant être modifiée par le signal de réglage.

16. Machine-outil selon la revendication 1, **caractérisée par le fait que** le dispositif de réglage (22) porte le dispositif de support (18).

17. Machine-outil selon la revendication 1, **caractérisée par le fait que** le dispositif de réglage (22) est un dispositif de réglage piézoélectrique (26, 27, 28, 29).

18. Machine-outil selon la revendication 1, **caractérisée par le fait que** le dispositif de réglage (22) est de type magnétique.

19. Machine-outil selon la revendication 1, **caractérisée par le fait que** le dispositif de réglage (22) est relié à un dispositif de commande (30) qui est relié à son tour à un dispositif de détection de position (31) destiné à détecter la position angulaire de la broche de travail (3).

20. Machine-outil selon la revendication 1, **caractérisée par le fait que** le dispositif de réglage (22) est relié à un dispositif de mesure (12) destiné à déterminer une erreur de position, dépendant de la position angulaire, de la pièce ou de l'outil (8) raccordé(e) à la broche de travail (3).

21. Procédé de déplacement d'une pièce à usiner ou d'un outil (8) à l'aide d'une broche de travail (3), dans une machine-outil (1), selon lequel
la pièce ou l'outil (8) est serré(e) sur la broche de travail (3) de la machine-outil (1),
on détermine l'erreur d'orientation de la pièce ou de l'outil (8) par rapport à l'axe de rotation (4) souhaité de la pièce (8) ou de l'outil,
on communique à la broche de travail (3) portant la pièce à usiner ou l'outil (8), lors de la rotation, un mouvement de nutation complémentaire, en vue de compenser l'erreur d'orientation de la pièce ou de l'outil (8), au moins à un emplacement défini (53).

22. Procédé selon la revendication 21, **caractérisé par le fait que** l'emplacement défini (53) est un endroit où la pièce (8) est en contact avec un outil ou l'outil est en contact avec une pièce (8).
